# EUROPEAN PATENT SPECIFICATION

(11) **EP 4 663 495 B1**
(45) Date of publication and mention of the grant of the patent: **23.09.2026**
(21) Application number: 25176262.1
(22) Date of filing: 14.05.2025
(51) Int. Cl.: B60T 17/08

(54) **PRESSURE PLATE FOR A BRAKE ACTUATOR AND PRESSURE PLATE ARRANGEMENT, SERVICE BRAKE ACTUATOR AND PARKING BRAKE ACTUATOR, BRAKING ASSEMBLY AND VEHICLE**
DRUCKPLATTE FÜR EINEN BREMSAKTUATOR UND DRUCKPLATTENANORDNUNG, BETRIEBSBREMSAKTUATOR UND FESTSTELLBREMSAKTUATOR, BREMSANLAGE SOWIE FAHRZEUG
PLAQUE DE PRESSION POUR UN ACTIONNEUR DE FREIN ET ENSEMBLE DE PLAQUE DE PRESSION, ACTIONNEUR DE FREIN DE SERVICE ET ACTIONNEUR DE FREIN DE STATIONNEMENT, ENSEMBLE DE FREINAGE ET VÉHICULE

(30) Priority: 15.06.2024 IN 202411046349
(43) Date of publication of application: 17.12.2025
(73) Proprietor: ZF CV Systems Europe BV, 1170 Brüssel (BE)
(72) Inventor: PREM KUMAR, Pratheesh Kumar, 641014 Coimbatore (IN); ARANGARASAN, Senthil Kumar, 600095 Chennai (IN)
(74) Representative: Rabe, Dirk-Heinrich

(56) References cited:
- US-A1- 2024 182 006

## Description

The present invention is directed to a pressure plate for a brake actuator that enables a modular approach for service brake actuators and parking brake actuators. The invention is further directed to a pressure plate arrangement for a service brake actuator, to a service brake actuator comprising a pressure plate arrangement, to a parking brake actuator comprising a pressure plate, to a braking arrangement and to a vehicle.

In known service brake actuators, the housing comprises a pressure plate and a non-pressure plate, typically connected by means of a clamp ring and with an elastic diaphragm arranged therebetween and dividing an inner volume of the service brake actuator in a first chamber, where actuating pressurized fluid is received, and a second chamber that houses a push rod for applying a braking force when the pressurized fluid is received. The pressure plate and the diaphragm enclose the first chamber that gets pressurized when the fluid is received, hence the name.

In known parking brake actuators, i.e., brake actuators having a combined service brake functionality and a parking brake functionality, the pressure plate found in the service brake actuators is typically substituted by a flange to which an parking brake unit or spring brake unit is attached to. The flange has an opening for a pressure rod, that allows a mechanical actuation of the diaphragm and of the push rod via a pressure rod that moves through the opening in the flange, when a parking brake signal is received. Also, the flange and the parking brake unit, together with the diaphragm enclose the first chamber, which is pressurized during operation of the service brake actuator. The document US 2024/182006 A1 shows a conventional combined service/spring brake cylinder, with a one-piece housing.

It would be therefore beneficial to enable to improve the integration of the different brake actuators to fulfill varying customer and engineering requirements.

This is where the invention comes in, wherein it is an objective of the present invention to provide a solution to the above mentioned problem.

According to a first aspect of the present invention a pressure plate for a brake actuator is disclosed. The pressure plate comprises a base section extending in a base plane perpendicular to a longitudinal, or axial, direction of the pressure plate. The pressure plate also comprises a peripheral radial wall extending from the base section in the longitudinal or axial direction, thereby forming a skirt around the base section. A peripheral rim is arranged on a distal end of the peripheral radial wall for connecting to a non-pressure plate for forming a housing of the brake actuator. The non-pressure plate is not a feature of the pressure plate of the first aspect of the invention. The pressure plate also comprises an inlet port for receiving a pressurized fluid and a central opening arranged on the base section and configured to receive a pressure rod of a spring brake unit. The spring brake unit is also not a feature of the pressure plate of the first aspect of the invention.

The pressure plate of the first aspect comprises a connection element that is arranged enclosing the central opening and that is configured to cooperate, in particular non-simultaneously, with a respective cooperating connection element of a cover configured to tightly close the central opening, for operation of the brake actuator in a service brake mode, and with a respective cooperating connection element of a parking brake chamber, such that the pressure rod of the spring brake unit is aligned with the central opening, for operation of the brake actuator in a parking brake mode.

Thus, the inventive pressure plate can be advantageously used for both service brake actuators and parking brake actuators, allowing for a modular design of the brake actuators.

In the following, developments of the pressure plate of the first aspect of the invention will be disclosed.

A preferred, but not limiting, non-simultaneous cooperation with the cover and the spring brake unit indicates that the connection element is configured to cooperate with both the cover and the spring brake unit but, at any given point in time, only one of them (or none) can be connected, or, in other words, the cover and the spring brake unit cannot be connected simultaneously to the pressure plate.

In a development, the inlet port is arranged on the peripheral radial wall.

In another development, the connection element is arranged on an exterior side of the base section. The exterior side refers to a service side, which, in operation of a service brake actuator, is accessible by a user, in opposition to the interior side. Accessing the interior side typically requires dismantling the brake actuator and separating the pressure plate from the non-pressure plate.

In yet another development, the connection element of the pressure plate is configured as a threaded connector. The threaded connector comprises a thread, that can be an outer thread or an inner thread, that is for instance arranged on a protruding section. In an alternative development, the connection element of the pressure plate is configured as a push-lock connector or as a ball locking mounting system.

Push lock connector, also referred to as push lock fitting, can be used in low-pressure hydraulic and pneumatic systems and has the advantage that no clamps or crimp sleeves are necessary to secure the fitting.

A second aspect of the present invention is formed by a pressure plate arrangement suitable for use in a service brake actuator. The pressure plate arrangement comprises a pressure plate in accordance with the first aspect of the invention and a cover comprising a cooperating connection element configured to tightly close the central opening of the pressure plate. The cover is used as a protective cap for closing the central opening and preventing air leakage during operation of a service brake actuator that includes the inventive pressure plate arrangement. Thus the pressure plate arrangement offers the same functionality as the known pressure plates for service brakes actuators.

The pressure plate arrangement thus shares the advantages of the pressure plate of the first aspect of the invention.

In a development of the pressure plate arrangement, the pressure plate and the cover comprise cooperating connection elements that form a threaded connection, or a push-lock connection or a ball locking mounting system.

A third aspect of the present invention is formed by a service brake actuator. The service brake actuator in accordance with the inventions comprises a pressure plate arrangement in accordance with the second aspect and a non-pressure plate. The non-pressure plate is connected to the peripheral rim of the pressure plate, and includes a push-rod opening. The service brake actuator of the third aspect also includes a diaphragm arranged between the pressure plate and the non-pressure plate and configured to divide an inner volume of the service brake actuator in a first chamber connected to the inlet port and a second chamber connected to, i.e., in fluid communication with, the push rod opening. A push rod is connected to the diaphragm and arranged in the second chamber such that a distal end of the push rod protrudes out of the non-pressure plate via the push-rod opening. In the service brake actuator of the third aspect of the invention, the cover is arranged to tightly close the central opening of the pressure plate for forming the first chamber. Further, the pressure plate, the non-pressure plate and the cover form a housing of the service brake actuator.

According to a fourth aspect of the invention, a parking brake actuator is disclosed. The parking brake actuator is a brake actuator that has a service brake functionality and a parking brake functionality. The parking brake actuator comprises a pressure plate in accordance with the first aspect of the invention. As in the case of the service brake actuator of the third aspect, the parking brake actuator also includes a non-pressure plate connected to the peripheral rim of the pressure plate, the non-pressure plate having a push-rod opening, a diaphragm arranged between the pressure plate and the non-pressure plate and configured to divide an inner volume of a service section of the parking brake actuator in a first chamber connected to the inlet port and a second chamber connected to the push rod opening and a push rod connected to the diaphragm and arranged in the second chamber such that a distal end of the push rod protrudes out of the non-pressure plate via the push-rod opening.

In addition, the parking brake actuator of the fourth aspect comprises a spring brake unit that includes a cooperating connection element configured to cooperate with the connection element of the pressure plate. The spring brake unit also comprises a pressure rod configured to actuate the push rod via the central opening of the pressure plate upon reception of a parking brake signal.

In a development, the pressure plate and the spring brake unit comprise cooperating connection elements that form a threaded connection, or a push-lock connection or a ball locking mounting system.

A fifth aspect of the present invention is formed by a braking assembly that includes a compressor unit configured to generate and provide compressed air, it optionally includes an air drying unit connected to the compressor unit and configured to dry the compressed air and provide dried compressed air, a compressed air reservoir connected to the compressor, in particular via the optional air drying unit and configured to store the dried compressed air, and one or more service brake actuators according to the third aspect and/or one or more parking brake actuators according to the forth aspect, both configured to exert a braking force via the push-rod in response to receiving dried compressed air from the compressed air reservoir, and, optionally, in the case of parking brake actuators, in response to receiving a parking brake signal.

A sixth aspect of the present invention is formed by a vehicle, in particular a commercial vehicle, comprising a service brake actuator in accordance with the third aspect, and/or a parking brake actuator in accordance with the fourth aspect and/or a braking assembly in accordance with the fifth aspect.

These and other aspects of the invention will be apparent from and elucidated with reference to the embodiments described hereinafter.

The embodiments of the invention are described in the following on the basis of the drawing in comparison with the state of the art, which is also partly illustrated. The latter is not necessarily intended to represent the embodiments to scale. The drawing is, where useful for explanation, shown in schematized and/or slightly distorted form. With regard to additions to the teaching immediately recognizable from the drawing, reference is made to the relevant prior art. It should be kept in mind that numerous modifications and changes can be made to the form and detail of an embodiment without deviating from the general concept of the invention.

The features of the invention disclosed in the description, in the drawing and in the claims may be essential for a further development of the invention, either individually or in any combination. In addition, all combinations of at least two of the features disclosed in the description, drawing and/or claims fall within the scope of the invention.

The general concept of the invention is not limited to the exact form or detail of the preferred embodiments shown and described below or to a subject matter, which would be limited in comparison to the subject matter as claimed in the claims.

For specified design ranges, values within specified limits of the ranges are also disclosed as limit values and thus are arbitrarily applicable and claimable.

The following drawings show in:
- Fig. 1A: a perspective view of an exemplary pressure plate in accordance with an embodiment of the present invention
- Fig. 1B: a side view of the exemplary pressure plate of Fig. 1A;
- Fig. 2: a cross-sectional view of an exemplary pressure plate in accordance with another embodiment of the present invention;
- Fig. 3: a cross-sectional view of an exemplary service brake actuator including a pressure plate arrangement in accordance with another embodiment of the present invention;
- Fig. 4: a cross-sectional view of a spring brake unit for use with a pressure plate in accordance with another embodiment of the present invention;
- Fig. 5: a cross-sectional view of a flange of a spring brake unit connected to a pressure plate in accordance with another embodiment of the present invention;
- Fig. 6: a cross-sectional view of a parking brake actuator including a pressure plate in accordance with another embodiment of the present invention, arranged between a spring brake unit and a service brake unit.
- Fig. 7: a schematic block diagram of a vehicle comprising a braking assembly in accordance with another embodiment of the invention.

For the following discussion of the figures, and for the sake of simplicity, those technical features having a similar or identical function will be referred to using the same reference numbers or reference signs.

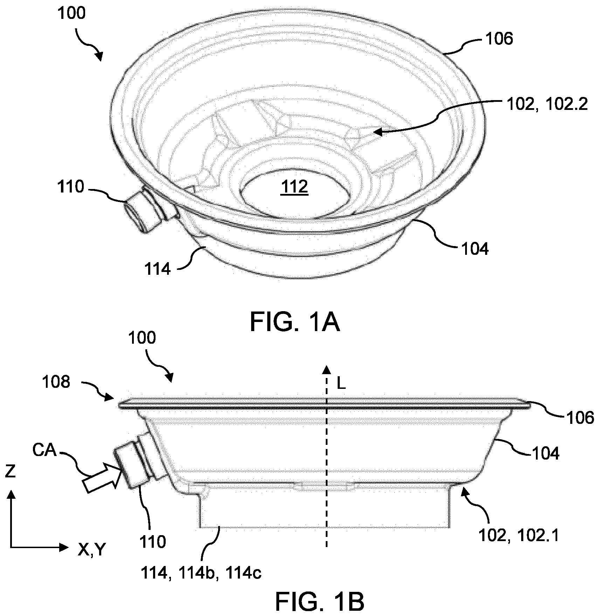

Fig. 1A illustrates a perspective view of an exemplary pressure plate 100 in accordance with an embodiment of the present invention.

Fig. 1B illustrates a side view of the exemplary pressure plate 100 of Fig. 1A.

Regarding Figs. A1 and 1B, the pressure plate 100 is suitable for use in a service brake actuator or a parking brake actuator, as it will be explained below. The pressure plate 100 comprises a base section 102 extending in a base plane XY perpendicular to a longitudinal direction L of the pressure plate, which, in Fig. 1B, corresponds to an axial direction Z. Fig. 1A shows an interior side 102.2 of the base section 102 and Fig. 1B shows an exterior side 102.1 of the base section 102. The pressure plate 100 also includes a peripheral radial wall 104 extending from the base section 102 in the longitudinal direction L. A peripheral rim 106 is arranged on a distal end 108 of the peripheral radial wall 104 for connecting to a non-pressure plate for forming a housing of the brake actuator, as it will be explained below. In the particular exemplary pressure plate 100 of Figs. 1A and 1B, the peripheral radial wall 104 extends in the longitudinal direction L with an increasing radius from the base plate towards the distal end 108. In other examples (not shown) the peripheral radial wall can be parallel, at least in one or more sections, to the longitudinal direction L.

The pressure plate 100 also includes an inlet port 110 that is arranged and configured to receive a pressurized fluid, such as, for instance, compressed air CA provided, for example, by a compressor. The inlet port enables a fluid connection between an interior portion of the pressure plate 100 and an exterior portion of the pressure plate. In this particular non-limiting example, the inlet port 110 is arranged on the peripheral radial wall 104. Alternatively, the inlet port can be arranged on the base plate 102, preferably in a non-central position.

The pressure plate 100 also includes a central opening 112 (see Fig. 1A) that is arranged on the base section 102 and configured to receive a pressure rod of a spring brake unit, as it will be explained below. Thus, the central opening, which is located at a central location of the base plate, is dimensioned to allow the pressure rod to move through the central opening 112.

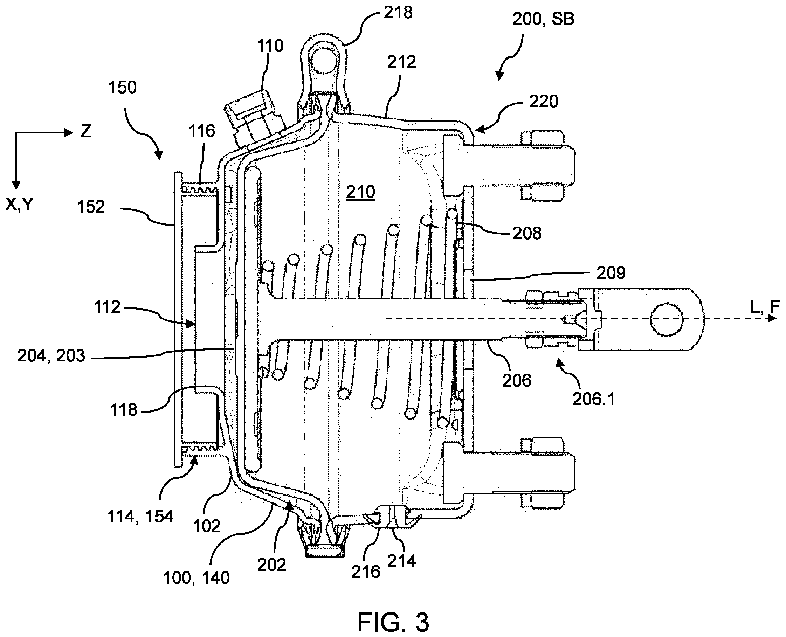

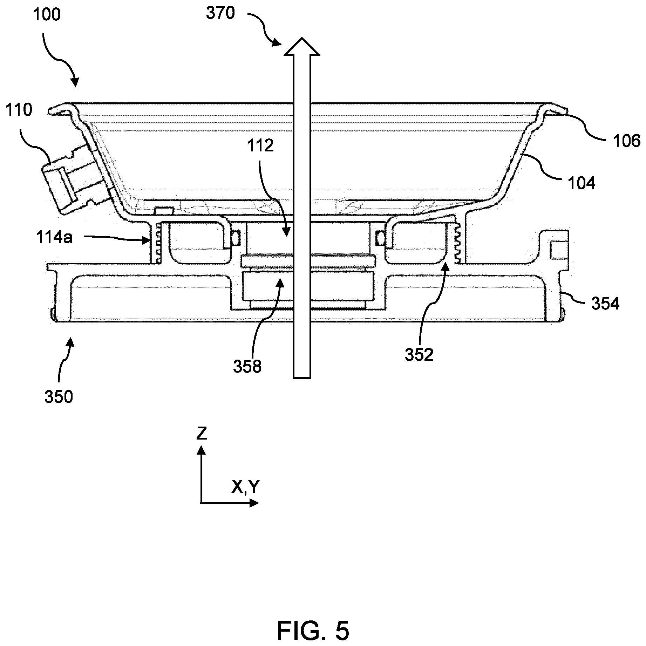

Further, a connection element 114 is provided. The connection element 114 is arranged such that it radially encloses the central opening 112. The connection element 114 is configured to cooperate, in particular non-simultaneously, with a respective cooperating connection element of a cover configured to tightly close the central opening 112, for operation of the brake actuator in a service brake mode, and with a respective cooperating connection element of a spring brake unit, such that the pressure rod of the spring brake unit is aligned with the central opening 112, for operation of the brake actuator in a parking brake mode. This will be further explained below with reference to Fig. 3 for the service brake actuator and the service brake mode and to Fig. 5 for the parking brake actuator and the corresponding parking brake mode. Thus, the connection element in designed or configured to interact with a cooperating connection element, which can be part of a cover (see e.g., Fig. 3) or of a spring brake unit (see e.g., Fig. 5).

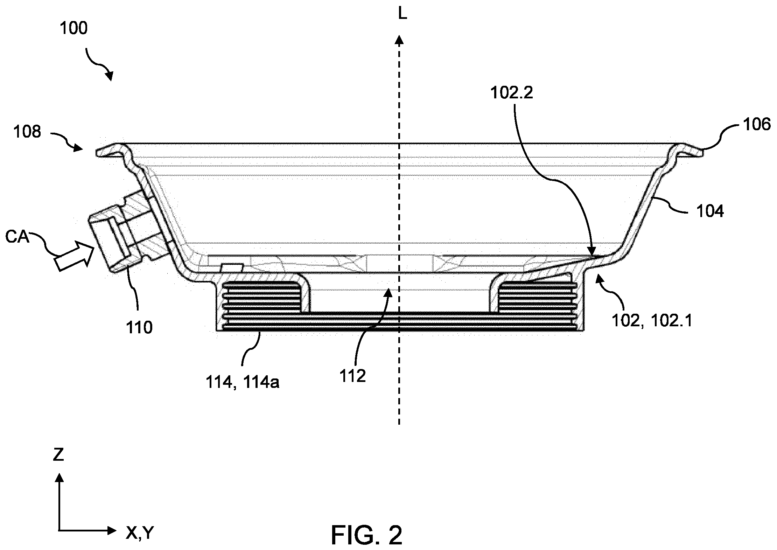

The connection element 114 of the pressure plate 100 can be for example configured as a threaded connection element (see e.g., Fig. 2), as a push-lock connector 114b or as a ball locking mounting system 114c.

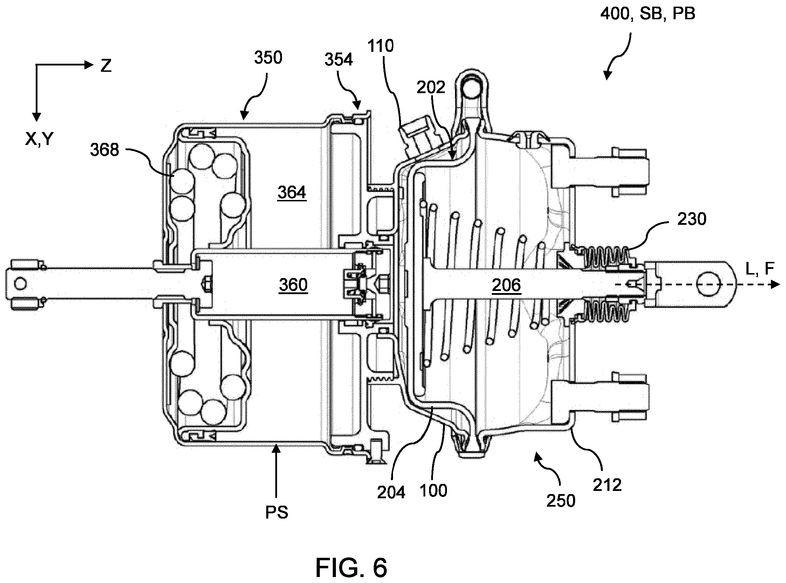

Fig. 2 shows a cross-sectional view of an exemplary pressure plate 100 in accordance with another embodiment of the present invention. The pressure plate 100 of Fig. 2 presents a connection element 114 in the form of a threaded connection element 114a to which a cover (see e.g., Fig. 3) or a spring brake unit (see e.g., Fig. 6) can be connected. The provision of a pressure brake to which several different cooperating elements can be connected enables a modular design of the brake actuators. The modular design refers to a product design by organizing sub-assemblies and components as distinct building blocks or modules that can be integrated through appropriate configuration to fulfill various customer and/or engineering requirements.

Fig. 3 shows a cross-sectional view of an exemplary service brake actuator 200 including a pressure plate arrangement 150 in accordance with another embodiment of the present invention. The pressure plate arrangement 150 includes the pressure plate 100 (see for instance the discussion regarding Figs. 1A, 1B and 2 above) and a cover 152. The cover 152 comprises a cooperating connection element 154 that is configured to cooperate with the connection element 114 of the pressure plate 100 to tightly close the central opening 112 of the pressure plate 100. Thus, the opening 112 cannot be accessed from the exterior of the service brake actuator because it is covered by the cover. Here, the connection element 114 of the pressure plate is arranged on an interior wall of a protruding radial element 116 having a larger radius than a minimum radius of the opening 112, which in Fig. 3 is delimited by a radial opening lip 118, enclosed by the protruding radial element 116 where the connection element 114 is arranged. During operation of the service brake actuator 200, i.e., when the service braking actuator 200 is actuated, for example, when a driver actuates the brake pedal, compressed air CA from a brake valve flows through inlet port 110 and into a first chamber 202 that is delimited by the pressure plate arrangement 150 on a proximal side, and by a movable separation element 203, which in this particular case is an elastic diaphragm 204, on a distal side. The movable separation element 203 can alternatively be a rigid element configured to slide along the inner wall of the housing of the brake actuator (not shown). The pressure building up in the first chamber 202 acts on the diaphragm 204 and pushes it, together with a push rod 206 attached to the diaphragm 204 along the longitudinal direction L, against the force a pressure spring 208 arranged inside a second chamber 210. The second chamber is delimited by a non-pressure plate 212 and by the movable separation element, in this example, the elastic diaphragm 204. The non-pressure plate 212 includes a push rod opening 209, through which a distal end 206.1 of the push rod 206 can move in the longitudinal direction L to exert a braking force F. When the braking process is ended, the pressure in the first chamber 202 is reduced by an upstream brake valve (not shown). At the same time, the pressure spring 208 returns both the push rod 206 and the diaphragm 204 to their original positions. The first chamber 202 is tight due to the tight connection between the connection element 114 of the pressure plate 100 and the cooperating connection element 154 of the cover, and because of a tight connection between the pressure plate 100 and the non-pressure plate 212. In particular, Fig. 3 also shows a fastening arrangement 218 for fastening the diaphragm 204 between the pressure plate 100, in particular the peripheral rim (106, see FIG. 1A, 1B or 2), and the non-pressure plate 212 by means of, for instance, a fastening clip 218, preferably a circumferential fastening clip.

Optionally, a filter 214 fitted in front of the air outlet holes 216 of the non-pressure plate 212 prevents dirt or dust penetrating into the second chamber 210 when the push rod 206 returns to its original position.

The housing 220 of the service brake actuator 200 is therefore formed by the pressure plate arrangement 150, which includes the pressure plate 100 and the cover 152 and by the non-pressure plate 212.

The use of the pressure plate 100 in accordance with the invention enables a modular design of the service brake actuator 200 also as a parking brake actuator by removing the cover 152 and connecting to the connection element 114, a spring brake unit.

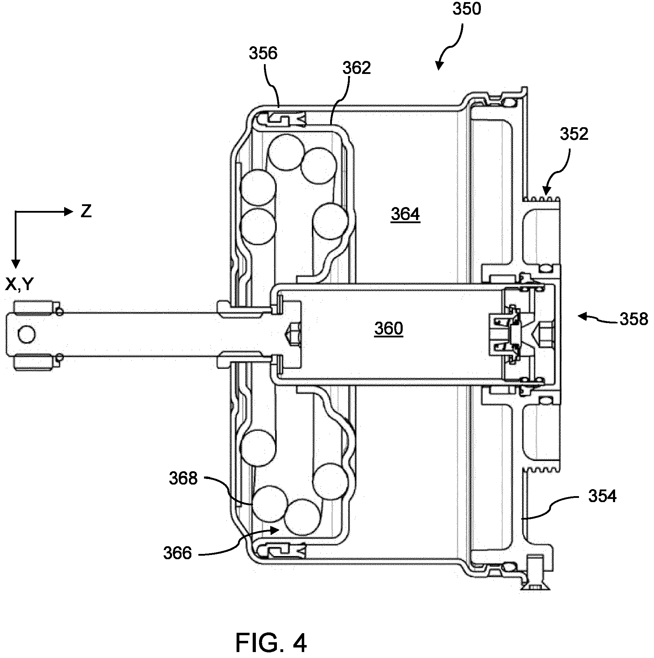

This is shown in Fig. 4, which illustrates a cross-sectional view of a spring brake unit 350 for use with a pressure plate 100 in accordance with another embodiment of the present invention. The spring brake unit 350 comprises a cooperating connection element 352, for instance a threaded connection element 352 for cooperating with the threaded connection element 114a of the pressure plate 100. The threaded connection element 152 is arranged on a flange 354, which forms part of a housing 356 of the spring brake unit 350. The flange 354 comprises a flange opening 358 through which a pressure rod 360 can protrude. A movable separation element 362 of the spring brake unit 350 divides an inner volume of the housing 356 into a first parking brake chamber 364 and a second parking brake chamber 366, which houses a spring element or compression spring 368. The operation of the spring brake unit is known to the person skilled in the art and will be briefly discussed with reference to Fig. 6 below.

Fig. 5 illustrates in more detail, in a cross-sectional view, a threaded connection between a threaded connection element 352 arranged on the flange 354 of a spring brake unit 350 and a cooperating threaded connection element 114a arranged on the pressure plate 100 in accordance with another embodiment of the present invention. With the treaded connection, the flange opening 358 of the flange 354 is aligned with the central opening 112 of the pressure plate providing a global opening 370, such that, when the parking brake actuator is in operation, the pressure rod 360 (see Fig. 4) can protrude through the global opening 370 to actuate the movable separation element 203 of the service brake actuator, e.g., the elastic diaphragm 204.

Fig. 6 illustrates a cross-sectional view of a parking brake actuator 400 including a pressure plate 100 in accordance with another embodiment of the present invention, arranged between a spring brake unit 350 and a service brake unit 250. The operation of the parking brake actuator 400 in the service brake mode SB is identical to that described with reference to Fig. 3. The tight connection between the flange 354 and the pressure plate 100 together with the tight arrangement of the pressure rod 360 in the spring brake unit 350, and the tight connection between the pressure plate 100 and the non-pressure plate 212, creates a fluid tight first chamber 202 in the service brake unit 250 that can be pressurized with fluid, such as compressed air CA, provided via the inlet port 110 to drive the diaphragm 204 and the push rod 206 out of the service brake unit 250 for exerting the braking force F in the longitudinal direction. In addition to the service brake unit 250 of Fig 3, the service brake unit 250 of Fig. 6 further comprises a bellow connected to the distal end 206.1 of the push rod 206 and configured to protect the push rod opening 209.

During operation of the parking brake actuator 400 in the parking brake mode PB, when the parking brake is actuated the pressure in the first parking brake chamber 364 is fully or partially released via a release port, which is preferably located on the peripheral radial wall of the flange 354 or on the housing 356 (not shown). In this process, the force of the relaxing compression spring 368 acts on the movable separation element 362 of the spring brake unit 350 (e.g. a wheel brake via piston) and on the pressure rod 360, which moves in the longitudinal direction and mechanically actuates the diaphragm 204 in the service park unit 250, thereby generating again a braking force F in the longitudinal direction L. The maximum braking force F of the spring brake unit 350 (i.e., the spring-loaded portion of the parking brake actuator 400) is achieved when the first parking brake chamber 364 is pressureless. Since this braking force F is achieved exclusively by mechanical means, i.e., by compression spring 368, the spring-loaded portion may be used for the parking brake. When the brake is released, the pressure is once
again increased in the first parking brake chamber 364, for instance via the release port, which is preferably located on the peripheral radial wall of the flange 354 or on the housing 356 (not shown) and the compression spring 368 and the pressure rod 360 are brought back to their initial, unactuated, position.

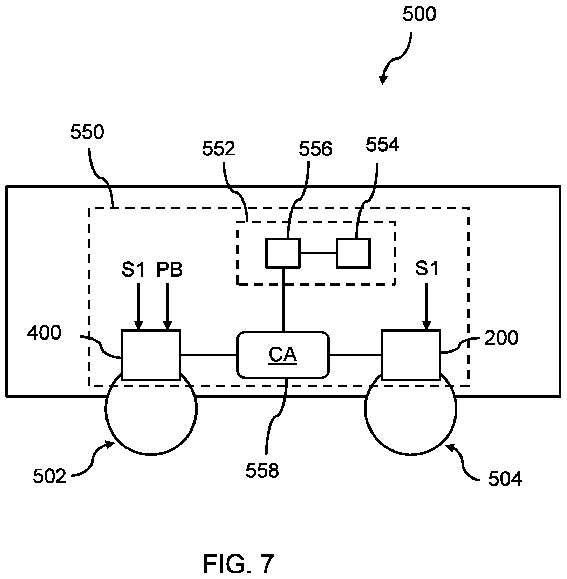

Fig. 7 shows a schematic block diagram of a vehicle 500, in particular a commercial vehicle such as a truck or a bus, comprising a braking assembly 550 in accordance with another embodiment of the invention. The vehicle 500 comprises, for example, a drive axle 502 and a steer axle 504. The braking assembly 550 comprises an air processing unit 552 that includes a compressor 554 and an air drying unit 556, which is configured to absorb the moisture from the compressed air CA provided by the compressor 554. Additionally, the air drying unit may comprise filters such as oil filters. The compressed air CA provided by the compressor 554 and dried by the air drying unit 556 is then stored in a compressed air reservoir 558. Upon request, by providing a service brake signal S1, the stored compressed air CA is used to drive the service units 250 of the service brake actuator 200 arranged on the steer axle 504 and of the park brake actuator 400 arranged on the drive axle 502. The stored compressed air CA can also be used to operate other pneumatic systems of the vehicle 500, such as an air suspension system including air bellows (not shown). The compressed air CA stored in the reservoir 558 can also be used in a so-called regeneration phase of the air drying unit 556, for reducing the amount of moisture in the desiccant material.

The service brake actuator 200 and the parking brake actuators are configured to provide the braking force F, via the push rod piston 206, in response to the reception of the service brake signal S1, e.g., the driver actuating the brake pedal.

The parking brake actuator 400 is configured to provide the braking force F in response to the reception of one of two different braking signals. One is the service brake signal S1 (e.g. the driver actuating the brake pedal), and the other one is a parking brake signal PB (e.g. the driver actuating a hand-brake lever, or a parking brake button).

In summary, the invention is directed to a pressure plate for a brake actuator, which comprises a base section a peripheral radial wall extending from the base section in a longitudinal direction. A peripheral rim is arranged on a distal end of the peripheral radial wall for connecting to a non-pressure plate of the actuator. An inlet port is provided for receiving a pressurized fluid. A central opening is arranged on the base section and is configured to receive a pressure rod of a spring brake unit. A connection element configured to cooperate with a respective cooperating connection element of a cover configured to tightly close the central opening, and with a respective cooperating connection element of a spring brake unit, such that the pressure rod of the spring brake unit is aligned with the central opening.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single unit or device may fulfill the functions of several items recited in the claims. The mere fact that certain measures are recited in mutually different dependent claims does not indicate that a combination of these measures cannot be used to advantage. Any reference signs in the claims should not be construed as limiting the scope.

### List of reference signs (Part of the description)

- 100: Pressure plate
- 102: Base section
- 102.1: Exterior side of base section
- 102.2: Interior side of base section
- 104: Peripheral radial wall
- 106: Peripheral rim
- 108: Distal end of peripheral radial wall
- 110: Inlet port
- 112: Central opening
- 114: Connection element
- 114a: Connection element; threaded connection element
- 114b: Connection element; push-lock connector
- 114c: Connection element; ball locking mounting system
- 116: Protruding radial element
- 118: Radial opening lip
- 150: Pressure plate arrangement
- 152: Cover
- 154: Cooperating connection element
- 200: Service brake actuator
- 202: First chamber of service brake actuator
- 203: Movable separation element
- 204: Elastic diaphragm
- 206: Push rod
- 206.1: Distal end of push rod
- 208: Pressure spring
- 209: Push rod opening
- 210: Second chamber of service brake actuator
- 212: Non-pressure plate
- 214: Filter
- 216: Air outlet holes
- 218: Fastening arrangement
- 220: Housing
- 250: Service brake unit
- 350: Spring brake unit
- 352: Cooperating connection element of spring brake unit
- 354: Flange
- 356: Housing of spring brake unit
- 358: Flange opening
- 360: Pressure rod
- 362: Movable separation element of spring brake unit
- 364: First parking brake chamber
- 366: Second parking brake chamber
- 368: Spring element; compression spring
- 370: Global opening
- 400: Parking brake actuator
- 500: Vehicle
- 502: Drive axle
- 504: Steer axle
- 550: Braking assembly
- 552: Air processing unit
- 554: Compressor
- 556: Air drying unit
- 558: Compressed air reservoir
- CA: Compressed air
- F: Braking force
- L: Longitudinal direction
- PB: Parking brake mode
- PS: Parking brake signal
- SB: Service brake mode
- XY: Base plane
- Z: Axial direction

## Claims

1. Pressure plate (100) for a brake actuator (200, 400), the pressure plate (100) comprising:
- a base section (102) extending in a base plane (XY) perpendicular to a longitudinal direction (L) of the pressure plate (100) and a peripheral radial wall (104) extending from the base section (102) in the longitudinal direction (L);
- a peripheral rim (106) arranged on a distal end (108) of the peripheral radial wall (104) for connecting to a non-pressure plate (212) for forming a housing (220) of the brake actuator (200, 400);
- an inlet port (110) for receiving a pressurized fluid (CA);
- a central opening (112) arranged on the base section (102) and configured to receive a pressure rod (360) of a spring brake unit (350);
- a connection element (114) arranged enclosing the central opening (112) and configured to cooperate, in particular non-simultaneously, with a respective cooperating connection element (154) of a cover (152) configured to tightly close the central opening (112), for operation of the brake actuator in a service brake mode (SB), and with a respective cooperating connection element (352) of a spring brake unit (350), such that the pressure rod (360) of the spring brake unit (350) is aligned with the central opening (112), for operation of the brake actuator (400) in a parking brake mode (PB).

2. The pressure plate (100) of claim 1, wherein the inlet port (110) is arranged on the peripheral radial wall (104).

3. The pressure plate (100) of claim 1 or 2, wherein the connection element (114) is arranged on an exterior side (102.1) of the base section (102).

4. The pressure plate (100) of any of the preceding claims 1 to 3, wherein the connection element (114) of the pressure plate (100) is configured as a threaded connector (114a).

5. The pressure plate (100) of any of the preceding claims 1 to 3, wherein the connection element (114) of the pressure plate is configured as a push-lock connector (114b) or as a ball locking mounting system (114c).

6. Pressure plate arrangement (150) for a service brake actuator (200), the pressure plate arrangement (150) comprising:
- a pressure plate (100) in accordance with any of the preceding claims 1 to 5; and
- a cover (152) comprising a cooperating connection element (154) configured to cooperate with the connection element (114) of the pressure plate (100) to tightly close the central opening (112) of the pressure plate (100).

7. The pressure plate arrangement (150) of claim 6, wherein the pressure plate (100) and the cover (152) comprise a connection element (114) and a cooperating connection element (154) that form a threaded connection (114a), or a push-lock connection (114b) or a ball locking mounting system (114c).

8. Service brake actuator (200), comprising:
- a pressure plate arrangement (150) in accordance with any of the preceding claims 6 or 7;
- a non-pressure plate (212) connected to the peripheral rim (106) of the pressure plate (100), the non-pressure plate having a push-rod opening (209);
- a movable separation element (203), in particular a diaphragm (204) arranged between the pressure plate (100) and the non-pressure plate (212), the movable separation element (203) and configured to divide an inner volume (202, 210) of the service brake actuator (200) in a first chamber (202) connected to the inlet port (110) and a second chamber (210) connected to the push rod opening (209);
- a push rod (206) connected to the movable separation element (203) and arranged in the second chamber (210) such that a distal end (206.1) of the push rod (206) protrudes out of the non-pressure plate (212) via the push-rod opening (209);
- wherein the cover (152) is arranged to tightly close the central opening (212) of the pressure plate (100) for forming the first chamber (202); and
- wherein the pressure plate (100), the non-pressure plate (212) and the cover (152) form a housing of the service brake actuator (220).

9. Parking brake actuator (400), comprising:
- a pressure plate (100) in accordance with any of the preceding claims 1 to 5;
- a non-pressure plate (212) connected to the peripheral rim (106) of the pressure plate (100), the non-pressure plate (212) having a push-rod opening (209);
- a movable separation element (203), preferably an elastic diaphragm (204) arranged between the pressure plate (100) and the non-pressure plate (212), the movable separation element (203) configured to divide an inner volume (202, 210) of the service brake actuator (200) in a first chamber (202) connected to the inlet port (110) and a second chamber (210) connected to the push rod opening (209);
- a push rod (206) connected to the movable separation element (203) and arranged in the second chamber (210) such that a distal end (206.1) of the push rod (206) protrudes out of the non-pressure plate (212) via the push-rod opening (209); and
- a spring brake unit (350) comprising a cooperating connection element (352) configured to cooperate with the connection element (114) of the pressure plate (100), and comprising a pressure rod (360) configured to actuate the push rod (206) via the central opening (112) of the pressure plate (100) upon reception of a parking brake signal (PS).

10. The parking brake actuator (400) of claim 9, wherein the pressure plate (100) and the spring brake unit (350) comprise cooperating connection elements(114, 352) that form a threaded connection (114a), or a push-lock connection (114b) or a ball locking mounting system (114c).

11. Braking assembly (550) comprising:
- a compressor unit (554) configured to generate and provide compressed air (CA);
- optionally an air drying (556) unit connected to the compressor unit (554) and configured to dry the compressed air (CA) and provide dried compressed air (CA);
- a compressed air reservoir (558) connected to the compressor (554), in particular via the optional air drying unit (556), and configured to store the dried compressed air (CA);
- one or more service brake actuators (200) according to claim 8 and/or one or more parking brake actuators (400) according to claim 9 or 10, configured to exert a braking force (F) via the push rod (206) in response to receiving compressed air (CA) from the compressed air reservoir (558), and, optionally, in response to receiving a parking brake signal (PB).

12. Vehicle (500), in particular commercial vehicle, comprising a service brake actuator (200) in accordance with claim 8, and/or a parking brake actuator (400) in accordance with claim 9 or 10 and/or a braking assembly (550) in accordance with claim 11.

## Patentansprüche

1. Druckplatte (100) für einen Bremsaktuator (200, 400), die Druckplatte (100) umfassend:
- einen Basisabschnitt (102), der sich in einer Basisebene (XY) senkrecht zu einer Längsrichtung (L) der Druckplatte (100) erstreckt, und eine radiale Umfangswand (104), die sich von dem Basisabschnitt (102) in der Längsrichtung (L) erstreckt;
- einen Umfangsrand (106), der an einem distalen Ende (108) der radialen Umfangswand (104) angeordnet ist, zum Verbinden mit einer Nicht-Druckplatte (212) zum Ausbilden eines Gehäuses (220) des Bremsaktuators (200, 400);
- einen Einlassanschluss (110) zum Empfangen eines Druckfluids (CA);
- eine zentrale Öffnung (112), die an dem Basisabschnitt (102) angeordnet und konfiguriert ist, um eine Druckstange (360) einer Federbremseinheit (350) zu empfangen;
- ein Verbindungselement (114), das die zentrale Öffnung (112) umschließend angeordnet und konfiguriert ist, um, insbesondere nicht gleichzeitig, mit einem jeweiligen zusammenwirkenden Verbindungselement (154) einer Abdeckung (152), die konfiguriert ist, um die zentrale Öffnung (112) dicht zu verschließen, für einen Einsatz des Bremsaktuators in einem Betriebsbremsmodus (SB), und mit einem jeweiligen zusammenwirkenden Verbindungselement (352) einer Federbremseinheit (350) derart, dass die Druckstange (360) der Federbremseinheit (350) an der zentralen Öffnung (112) ausgerichtet ist, für den Einsatz des Bremsaktuators (400) in einem Feststellbremsmodus (PB) zusammenzuwirken.

2. Druckplatte (100) nach Anspruch 1, wobei der Einlassanschluss (110) an der radialen Umfangswand (104) angeordnet ist.

3. Druckplatte (100) nach Anspruch 1 oder 2, wobei das Verbindungselement (114) an einer Außenseite (102,1) des Basisabschnitts (102) angeordnet ist.

4. Druckplatte (100) nach einem der vorstehenden Ansprüche 1 bis 3, wobei das Verbindungselement (114) der Druckplatte (100) als ein Gewindeverbinder (114a) ausgebildet ist.

5. Druckplatte (100) nach einem der vorstehenden Ansprüche 1 bis 3, wobei das Verbindungselement (114) der Druckplatte als ein Push-Lock-Verbinder (114b) oder als ein Kugelverriegelungsmontagesystem (114c) konfiguriert ist.

6. Druckplattenanordnung (150) für einen Betriebsbremsaktuator (200), die Druckplattenanordnung (150) umfassend:
- eine Druckplatte (100) nach einem der vorstehenden Ansprüche 1 bis 5; und
- eine Abdeckung (152), umfassend ein zusammenwirkendes Verbindungselement (154), das konfiguriert ist, um mit dem Verbindungselement (114) der Druckplatte (100) zusammenzuwirken, um die zentrale Öffnung (112) der Druckplatte (100) dicht zu verschließen.

7. Druckplattenanordnung (150) nach Anspruch 6, wobei die Druckplatte (100) und die Abdeckung (152) ein Verbindungselement (114) und ein zusammenwirkendes Verbindungselement (154) umfassen, die eine Gewindeverbindung (114a) oder eine Push-Lock-Verbindung (114b) oder ein Kugelverriegelungsmontagesystem (114c) ausbilden.

8. Betriebsbremsaktuator (200), umfassend:
- eine Druckplattenanordnung (150) nach einem der vorstehenden Ansprüche 6 oder 7;
- eine Nicht-Druckplatte (212), die mit dem Umfangsrand (106) der Druckplatte (100) verbunden ist, wobei die Nicht-Druckplatte eine Schubstangenöffnung (209) aufweist;
- ein bewegbares Trennelement (203), insbesondere eine Membran (204), die zwischen der Druckplatte (100) und der Nicht-Druckplatte (212) angeordnet ist, wobei das bewegbare Trennelement (203) konfiguriert ist, um ein Innenvolumen (202, 210) des Betriebsbremsaktuators (200) in eine erste Kammer (202), die mit dem Einlassanschluss (110) verbunden ist, und eine zweite Kammer (210) zu unterteilen, die mit der Schubstangenöffnung (209) verbunden ist;
- eine Schubstange (206), die mit dem bewegbaren Trennelement (203) verbunden und in der zweiten Kammer (210) derart angeordnet ist, dass ein distales Ende (206,1) der Schubstange (206) durch die Schubstangenöffnung (209) aus der Nichtdruckplatte (212) herausragt;
- wobei die Abdeckung (152) angeordnet ist, um die zentrale Öffnung (212) der Druckplatte (100) zum Ausbilden der ersten Kammer (202) dicht zu verschließen; und
- wobei die Druckplatte (100), die Nicht-Druckplatte (212) und die Abdeckung (152) ein Gehäuse des Betriebsbremsaktuators (220) ausbilden.

9. Feststellbremsaktuator (400), umfassend:
- eine Druckplatte (100) nach einem der vorstehenden Ansprüche 1 bis 5;
- eine Nicht-Druckplatte (212), die mit dem Umfangsrand (106) der Druckplatte (100) verbunden ist, wobei die Nicht-Druckplatte (212) eine Schubstangenöffnung (209) aufweist;
- ein bewegbares Trennelement (203), vorzugsweise eine elastische Membran (204), die zwischen der Druckplatte (100) und der Nicht-Druckplatte (212) angeordnet ist, wobei das bewegbare Trennelement (203) konfiguriert ist, um ein Innenvolumen (202, 210) des Betriebsbremsaktuators (200) in eine erste Kammer (202), die mit dem Einlassanschluss (110) verbunden ist, und eine zweite Kammer (210) zu unterteilen, die mit der Schubstangenöffnung (209) verbunden ist;
- eine Schubstange (206), die mit dem bewegbaren Trennelement (203) verbunden und in der zweiten Kammer (210) derart angeordnet ist, dass ein distales Ende (206,1) der Schubstange (206) durch die Schubstangenöffnung (209) aus der Nichtdruckplatte (212) herausragt; und
- eine Federbremseinheit (350), umfassend ein zusammenwirkendes Verbindungselement (352), das konfiguriert ist, um mit dem Verbindungselement (114) der Druckplatte (100) zusammenzuwirken, und umfassend eine Druckstange (360), die konfiguriert ist, um bei Empfang eines Feststellbremssignals (PS) die Schubstange (206) über die zentrale Öffnung (112) der Druckplatte (100) zu betätigen.

10. Feststellbremsaktuator (400) nach Anspruch 9, wobei die Druckplatte (100) und die Federbremseinheit (350) zusammenwirkende Verbindungselemente (114, 352) umfassen, die eine Gewindeverbindung (114a) oder eine Push-Lock-Verbindung (114b) oder ein Kugelverriegelungsmontagesystem (114c) ausbilden.

11. Bremsanordnung (550), umfassend:
- eine Kompressoreinheit (554), die konfiguriert ist, um Druckluft (CA) zu erzeugen und bereitzustellen;
- optional eine Einheit für Lufttrocknung (556), die mit der Kompressoreinheit (554) verbunden und konfiguriert ist, um die Druckluft (CA) zu trocknen und getrocknete Druckluft (CA) bereitzustellen;
- einen Druckluftspeicher (558), der mit dem Kompressor (554) verbunden ist, insbesondere über die optionale Lufttrocknungseinheit (556), und konfiguriert ist, um die getrocknete Druckluft (CA) zu lagern;
- einen oder mehrere Betriebsbremsaktuatoren (200) nach Anspruch 8 und/oder einen oder mehrere Feststellbremsaktuatoren (400) nach Anspruch 9 oder 10, die konfiguriert sind, um als Reaktion auf den Empfang von Druckluft (CA) aus dem Druckluftspeicher (558) und optional als Reaktion auf den Empfang eines Feststellbremssignals (PB) eine Bremskraft (F) über die Schubstange (206) auszuüben.

12. Fahrzeug (500), insbesondere ein Nutzfahrzeug, umfassend einen Betriebsbremsaktuator (200) nach Anspruch 8, und/oder einen Feststellbremsaktuator (400) nach Anspruch 9 oder 10 und/oder eine Bremsanordnung (550) nach Anspruch 11.

## Revendications

1. Plaque de pression (100) pour un actionneur de frein (200, 400), la plaque de pression (100) comprenant :
- une section de base (102) s'étendant dans un plan de base (XY) perpendiculaire à une direction longitudinale (L) de la plaque de pression (100) et une paroi radiale périphérique (104) s'étendant à partir de la section de base (102) dans la direction longitudinale (L) ;
- un rebord périphérique (106) agencé sur une extrémité distale (108) de la paroi radiale périphérique (104) pour se relier à une plaque de non-pression (212) pour former un boîtier (220) de l'actionneur de frein (200, 400) ;
- un orifice d'entrée (110) destiné à recevoir un fluide sous pression (CA) ;
- une ouverture centrale (112) agencée sur la section de base (102) et conçue pour recevoir une tige de pression (360) d'une unité de frein à ressort (350) ;
- un élément de liaison (114) agencé enfermant l'ouverture centrale (112) et conçu pour coopérer, en particulier de manière non simultanée, avec un élément de liaison coopérant (154) respectif d'un couvercle (152) conçu pour fermer fermement l'ouverture centrale (112), pour le fonctionnement de l'actionneur de frein dans un mode de frein de service (SB), et avec un élément de liaison coopérant (352) respectif d'une unité de frein à ressort (350), de telle sorte que la tige de pression (360) de l'unité de frein à ressort (350) est alignée sur l'ouverture centrale (112), pour le fonctionnement de l'actionneur de frein (400) dans un mode de frein de stationnement (PB).

2. Plaque de pression (100) selon la revendication 1, dans laquelle l'orifice d'entrée (110) est agencé sur la paroi radiale périphérique (104).

3. Plaque de pression (100) selon la revendication 1 ou 2, dans laquelle l'élément de liaison (114) est agencé sur un côté extérieur (102,1) de la section de base (102).

4. Plaque de pression (100) selon l'une quelconque des revendications 1 à 3 précédentes, dans laquelle l'élément de liaison (114) de la plaque de pression (100) est conçu en guise de liaison filetée (114a).

5. Plaque de pression (100) selon l'une quelconque des revendications 1 à 3 précédentes, dans laquelle l'élément de liaison (114) de la plaque de pression est conçu en guise de liaison à verrouillage par poussée (114b) ou en guise de système de montage à verrouillage à bille (114c).

6. Agencement de plaque de pression (150) pour un actionneur de frein de service (200), l'agencement de plaque de pression (150) comprenant :
- une plaque de pression (100) selon l'une quelconque des revendications 1 à 5 précédentes ; et
- un couvercle (152) comprenant un élément de liaison coopérant (154) conçu pour coopérer avec l'élément de liaison (114) de la plaque de pression (100) pour fermer fermement l'ouverture centrale (112) de la plaque de pression (100).

7. Agencement de plaque de pression (150) selon la revendication 6, dans lequel la plaque de pression (100) et le couvercle (152) comprennent un élément de liaison (114) et un élément de liaison coopérant (154) qui forment une liaison filetée (114a), ou une liaison à verrouillage par poussée (114b) ou un système de montage à verrouillage à bille (114c).

8. Actionneur de frein de service (200), comprenant en outre :
- un agencement de plaque de pression (150) conformément à l'une quelconque des revendications 6 ou 7 précédentes ;
- une plaque de non-pression (212) reliée au rebord périphérique (106) de la plaque de pression (100), la plaque de non-pression ayant une ouverture de tige de poussée (209) ;
- un élément de séparation mobile (203), en particulier un diaphragme (204) agencé entre la plaque de pression (100) et la plaque de non-pression (212), l'élément de séparation mobile (203) et conçu pour diviser un volume interne (202, 210) de l'actionneur de frein de service (200) en une première chambre (202) reliée à l'orifice d'entrée (110) et une seconde chambre (210) reliée à l'ouverture de tige de poussée (209) ;
- une tige de poussée (206) reliée à l'élément de séparation mobile (203) et agencée dans la seconde chambre (210) de telle sorte qu'une extrémité distale (206,1) de la tige de poussée (206) dépasse de la plaque de non-pression (212) par l'intermédiaire de l'ouverture de tige de poussée (209) ;
- dans lequel le couvercle (152) est agencé pour fermer fermement l'ouverture centrale (212) de la plaque de pression (100) pour former la première chambre (202) ; et
- dans lequel la plaque de pression (100), la plaque de non-pression (212) et le couvercle (152) forment un boîtier de l'actionneur de frein de service (220).

9. Actionneur de frein de stationnement (400), comprenant :
- une plaque de pression (100) selon l'une quelconque des revendications 1 à 5 précédentes ;
- une plaque de non-pression (212) reliée au rebord périphérique (106) de la plaque de pression (100), la plaque de non-pression (212) ayant une ouverture de tige de poussée (209) ;
- un élément de séparation mobile (203), de préférence un diaphragme (204) agencé entre la plaque de pression (100) et la plaque de non-pression (212), l'élément de séparation mobile (203) étant conçu pour diviser un volume interne (202, 210) de l'actionneur de frein de service (200) en une première chambre (202) reliée à l'orifice d'entrée (110) et une seconde chambre (210) reliée à l'ouverture de tige de poussée (209) ;
- une tige de poussée (206) reliée à l'élément de séparation mobile (203) et agencée dans la seconde chambre (210) de telle sorte qu'une extrémité distale (206,1) de la tige de poussée (206) dépasse de la plaque de non-pression (212) par l'intermédiaire de l'ouverture de tige de poussée (209) ; et
- une unité de frein à ressort (350) comprenant un élément de liaison coopérant (352) conçu pour coopérer avec l'élément de liaison (114) de la plaque de pression (100), et comprenant une tige de pression (360) conçue pour actionner la tige de poussée (206) par le biais de l'ouverture centrale (112) de la plaque de pression (100) lors de la réception d'un signal de frein de stationnement (PS).

10. Actionneur de frein de stationnement (400) selon la revendication 9, dans lequel le plateau de pression (100) et l'unité de frein à ressort (350) comprennent des éléments de liaison coopérants (114, 352) qui forment une liaison filetée (114a), ou une liaison à verrouillage par poussée (114b) ou un système de montage à verrouillage à bille (114c).

11. Ensemble de freinage (550) comprenant :
- une unité formant compresseur (554) conçue pour générer et fournir de l'air comprimé (CA) ;
- éventuellement une unité de séchage d'air (556) reliée à l'unité formant compresseur (554) et conçue pour sécher l'air comprimé (CA) et fournir de l'air comprimé (CA) séché ;
- un réservoir d'air comprimé (558) relié au compresseur (554), en particulier par le biais de l'éventuelle unité de séchage d'air (556), et conçu pour stocker l'air comprimé (CA) séché ;
- un ou plusieurs actionneurs de frein de service (200) selon la revendication 8 et/ou un ou plusieurs actionneurs de frein de stationnement (400) selon la revendication 9 ou 10, conçus pour exercer une force de freinage (F) par le biais de la tige de poussée (206) en réponse à la réception d'air comprimé (CA) en provenance du réservoir d'air comprimé (558), et, éventuellement, en réponse à la réception d'un signal de frein de stationnement (PB).

12. Véhicule (500), en particulier un véhicule utilitaire, comprenant un actionneur de frein de service (200) selon la revendication 8, et/ou un actionneur de frein de stationnement (400) selon la revendication 9 ou 10 et/ou un ensemble de freinage (550) selon la revendication 11.
